# EUROPÄISCHE PATENTSCHRIFT

(11) **EP 1 344 663 B1**
(45) Veröffentlichungstag und Bekanntmachung des Hinweises auf die Patenterteilung: **20.06.2007**
(21) Anmeldenummer: 03005196.5
(22) Anmeldetag: 08.03.2003
(51) Int. Cl.: B60H 1/00

(54) **Mehrkanalige Heizungs- und/oder Klimaanlage für ein Kraftfahrzeug**
Air-Conditioning or heating system with multiple air passages for a vehicle
Installation de climatisation et/ou chauffage avec passages multiples d'air pour véhicule

(30) Priorität: 12.03.2002 DE 10210875
(43) Veröffentlichungstag der Anmeldung: 17.09.2003
(73) Patentinhaber: Behr France Rouffach SAS, 68250 Rouffach (FR)
(72) Erfinder: Klein, Henri, 68000 Colmar (FR)
(74) Vertreter: Riedel, Peter

(56) Entgegenhaltungen:
- EP-A- 0 893 292
- EP-A- 1 231 088
- EP-B- 0 768 197
- DE-C- 19 816 332
- US-A- 5 975 422

## Beschreibung

Der in Kraftfahrzeugen für die Heizungs- oder Klimaanlagen zur Verfügung stehende Bauraum ist nicht nur in Kleinwagen oder Mittelklassewagen sehr begrenzt, sondern aufgrund stets zunehmender Ausstattung auch bei Fahrzeugen der oberen Klassen. Um ein behagliches Klima für alle Fahrzeuginsassen zu schaffen und dem Fahrer ein belastungs- und ermüdungsfreies Umfeld zu bieten, ist neben einer geeigneten vertikalen Temperaturschichtung der Luft im Fahrzeuginnenraum zunehmend auch die Möglichkeit einer individuellen Temperierung der linken bzw. rechten Fahrzeughälfte von Bedeutung.

Die bekannten mehrkanaligen Anlagen mit einem linken und einem rechten Luftzuführungskanal zur separaten Temperatureinstellung in der linken und der rechten Fahrzeughälfte sind insgesamt komplex aufgebaut und erfordern ein in vielen Fahrzeugen nicht zur Verfügung stehendes großes Bauvolumen.

Eine derartige mehrkanalige Heizungsanlage ist in der US 5,975,422 offenbart. Die einzige Figur zeigt einen mittigen Heizkörper, um den beidseitig zwei Bypaßkanäle herumgeführt sind. Zur Steuerung der Heizleistung des Heizkörpers ist ein den Fluß des Wärmemediums steuerndes Ventil vorgesehen. Eine individuelle Temperatureinstellung an den beiden Kanalauslässen erfolgt einerseits durch Betätigung des Steuerventils und andererseits durch Betätigung von Steuerklappen auf der Eingangsseite der Bypaßkanäle.

Der Erfindung liegt die Aufgabe zugrunde, eine leistungsfähige mehrkanalige Heizungs- und/oder Klimaanlage mit insgesamt geringem Bauvolumen zu schaffen.

Die Aufgabe wird durch eine Heizungs- und/oder Klimaanlage mit den Merkmalen des Anspruchs 1 gelöst.

Dazu ist vorgesehen, auf beiden Seiten des Heizkörpers der Anlage je einen Bypasskanal vorzusehen, wobei der linke bzw. der rechte Bypasskanal dem jeweiligen linken bzw. rechten Luftführungskanal der Anlage zugeordnet ist. Jeder Bypasskanal weist eine eigene Steuerklappe auf, mit der der Durchfluß des Luftstromes einstellbar ist. Bei geschlossenen Steuerklappen sind die Bypasskanäle gesperrt. Ein durch ein Gebläse geförderter Luftstrom wird durch den Heizkörper geleitet und erwärmt. Durch Betätigung einer oder beider Steuerklappen kann der jeweilige Bypasskanal ganz oder teilweise freigegeben werden, wodurch Kaltluft an dem Heizkörper vorbeigeführt und abströmseitig des Heizkörpers mit einem Anteil erwärmter Luft vermischt wird.

Bei der erfindungsgemäßen Anordnung erfolgt eine Erwärmung des durch den Heizkörper geführten Luftstromes, der den verschiedenen Austrittsöffnungen im Gehäuse, an die Luftführungskanäle zu den diversen Ausströmöffnungen im Fahrzeuginnenraum angeschlossen sind, zugeleitet wird. Durch die Zuordnung eines jeden Bypasskanales zum entsprechenden linken bzw. rechten Luftführungskanal kann den beiden Luftführungskanälen Kaltluft beigemischt werden, wobei der Anteil der Kaltluft über die Steuerklappen in den Bypaßkanälen bestimmt wird.

Um die Windschutzscheibe beschlagfrei zu halten und ggf. zu enteisen, sollte den Defrosterdüsen erforderlichenfalls möglichst warme Luft zugeführt werden. Auch ist bekannt, daß das Behaglichkeitsempfinden bei höherer Fußraumtemperatur gegenüber dem Bereich von Oberkörper und Kopf größer ist. Aus diesem Grund sind - zur Erreichung eines entsprechenden Temperaturprofils an den Ausströmdüsen - die Austrittsöffnungen für die Defrosterdüsen und Fußraumausströmern mindestens annähernd mittig zwischen dem rechten und linken Bypasskanal im Gehäuse der Anlage angeordnet, so daß kein spürbarer Einfluß durch den in den Bypässen strömenden Luftanteil gegeben ist.

Die Steuerklappen liegen dabei bevorzugt etwa in der Ebene des Heizkörpers. Durch die in Links/Rechts-Richtung seitlich liegenden Bypasskanäle und die zugehörigen Steuerklappen kann die Anlage in Durchströmungsrichtung und auch in Vertikalrichtung sehr kompakt gebaut sein. Die beiden seitlichen Steuerklappen erlauben eine wirkungsvolle Einzeltemperaturregelung des linken bzw. rechten Luftführungskanals mit nur geringen Umlenkungen des Luftstromes und entsprechend geringem Strömungswiderstand.

Die Steuerklappen sind dabei zweckmäßig um eine Drehachse schwenkbar ausgebildet, wobei die Drehachse etwa parallel zu einer linken bzw. rechten Kante des Heizkörpers verläuft. Die Steuerklappen können dabei langgestreckt ausgebildet und etwa parallel zu den genannten Kanten liegend angeordnet sein. Die Drehachse verläuft in Längsrichtung der flach ausgebildeten Steuerklappen und liegt vorzugsweise mindestens annähernd in der Längsmittelachse des Klappenkörpers, wodurch die Steuerklappen mit geringen Betätigungskräften präzise ansteuerbar sind.

Die Heizleistung der Anlage ist zweckmäßig mittels eines den Fluß des Wärmemediums im Heizkörper steuernden Ventils einstellbar. Mit nur einem Ventil in Verbindung mit dem zentralen, auf beide Klimatisierungskanäle wirkenden Heizkörper sowie mit der für jeden Bypasskanal separat einstellbaren Kaltluftzumischung ist die Heizleistung der Anlage einfach steuerbar und dennoch eine separate Temperatureinstellung für die einzelnen Luftführungskanäle gegeben.

Zur Steigerung der Kaltluftbeimischung oder der ausschließlichen Versorgung des Fahrgastinnenraumes mit gekühlter Luft ist die Anordnung eines Kältemittelverdampfers stromauf des Heizkörpers zweckmäßig.

Ein Ausführungsbeispiel der Erfindung wird im Folgenden anhand der Zeichnung näher beschrieben. Es zeigen:
- Fig. 1: einen schematisch dargestellten Längsschnitt durch eine Anlage mit einem oberen und einem unteren Belüftungskanal;
- Fig. 2: in perspektivischer Darstellung einen Heizkörper der Anordnung nach Fig. 1 mit seitlich angeordneten Steuerklappen zur Steuerung eines linken und rechten Bypasskanals;
- Fig. 3: eine Ansicht der Anordnung nach Fig. 1 in einem entsprechend der Linie III-III angedeuteten Querschnitt.

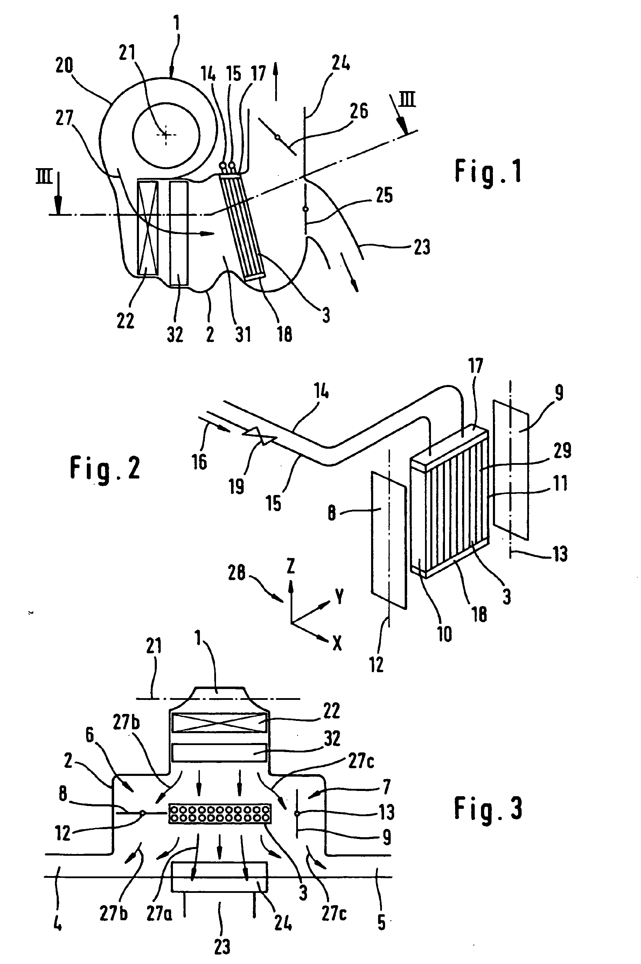

Fig. 1 zeigt am Beispiel einer Klimaanlage einen schematischen Längsschnitt durch deren wesentliche Komponenten in einem Gehäuse 2 mit einem als Radialgebläse 20 ausgebildeten Gebläse 1. In dem Ausführungsbeispiel ist das Gebläse symmetrisch zur Anlage angeordnet, es kann aber auch eine seitliche Anordnung vorgesehen werden. Das Gebläse 1 erzeugt einen Luftstrom, der in einem durch das Gehäuse 2 gebildeten Luftkanal 31 entlang des Pfeils 27 durch einen im Luftkanal 2 angeordneten Luftfilter 22 und stromab von diesem angeordneten Kältemittelverdampfer 32 und einen weiter stromab gelegenen Heizkörper 3 geführt wird. Abströmseitig des Heizkörpers 3 sind in dem Gehäuse 2 je ein zu Defrosterdüsen führender Kanal 24 und ein zu Fußraumausströmern führender Kanal 23 vorgesehen. Die durch die beiden Kanäle 23, 24 strömende Luftmenge ist über schwenkbare Steuerklappen 25, 26 einstellbar.

Der Heizkörper 3 ist im wesentlichen stehend im Gehäuse 2 angeordnet und mit Anschlußleitungen 14, 15 an seiner oberen Horizontalkante 17 verbunden. Je nach Lage der Sammel- oder Umlenkkästen kann auch ein Anschluß an einer unteren Horizontalkante 18 zweckmäßig sein. Zur Erzielung einer kompakten Bauweise ist die Gebläseradachse 21 etwa im Bereich der oberen Horizontalkante 17 des Heizkörpers 3 und der dort verlaufenden Anschlußleitungen 14, 15 angeordnet.

Fig. 2 zeigt in perspektivischer Darstellung Einzelheiten der Anordnung nach Fig. 1 im Bereich des Heizkörpers 3. Zur näheren Erläuterung ist ein Koordinatenkreuz 28 des zu klimatisierenden Fahrzeuges dargestellt, wobei die X-Richtung der Vorwärtsrichtung des Fahrzeugs entspricht, die mit Y gekennzeichnete Achse die Links/Rechts-Richtung und die mit Z gekennzeichnete Achse die Hochrichtung angibt.

Mittels der Anschlußleitungen 14, 15 wird ein durch einen Pfeil 16 angedeutetes Wärmemedium durch den Heizkörper 3 geleitet. Dabei ist die Heizleistung der gezeigten Anlage mittels eines den Fluß des Wärmemediums 16 durch den Heizkörper 3 steuernden Ventils 19 einstellbar. Das Ventil 19 kann direkt im Heizkörper 3 integriert sein, es ist im gezeigten Ausführungsbeispiel jedoch in der Anschlußleitung 15 angeordnet.

Der Heizkörper 3 umfaßt eine Vielzahl von parallel zur linken bzw. rechten Kante 9, 10 des Heizkörpers 3 verlaufenden Rohre 29, durch die das Wärmemedium gemäß Pfeil 16 strömt. Die Kanten 10, 11 des Heizkörpers 3 liegen etwa in Hochrichtung. Die obere bzw. untere Horizontalkante 17, 18 verläuft in Links/Rechts-Richtung. Etwa in ihrer Verlängerung sind beidseitig der linken bzw. rechten Kante 10, 11 je eine linke bzw. rechte Steuerklappe 8, 9 angeordnet. Die Steuerklappen 8, 9 liegen damit etwa in der Ebene des Heizkörpers 3 und sind um parallel zu den Kanten 10, 11 verlaufende und annähernd in der Längsmittelebene der Steuerklappen 8, 9 liegende Drehachsen 12, 13 schwenkbar gelagert.

Fig. 3 zeigt die Anordnung nach Fig. 1 in einem Schnitt entlang der dort gezeigten Linie III-III. Demnach liegt die Gebläseradachse 21 in Links/Rechts-Richtung parallel zur oberen Horizontalkante 17 (Fig. 2) des Heizkörpers 3. Das Gehäuse 2 der Klimaanlage ist derart ausgeformt, daß der Luftkanal 31 im Bereich des Heizkörpers 3 in Links/Rechts-Richtung erweitert ist. Seitlich neben dem Heizkörper 3 ist je ein linker bzw. rechter Bypasskanal 6, 7 gebildet, in dem die jeweiligen Steuerklappen 8, 9 angeordnet sind. Durch Verschwenken der Steuerklappen 8, 9 um ihre jeweilige Drehachse 12, 13 ist der linke bzw. rechte Bypasskanal absperrbar oder ganz bzw. teilweise freigebbar.

Die Betätigung der Steuerklappen 8, 9 kann unabhängig voneinander erfolgen oder auch gekoppelt sein. Bei der gezeigten Anordnung wird der durch das Gebläse 1 erzeugte zentrale Luftstrom 27 (Fig. 1) in einen mittleren Teilstrom 27a zur Durchströmung des zentralen Heizkörpers 3 sowie in einen linken und rechten Teilstrom 27b, 27c aufgeteilt. Abhängig von der Stellung der Steuerklappen 8, 9 ist der jeweilige linke bzw. rechte Teilstrom 27b, 27c aus Kaltluft mehr oder weniger stark ausgeprägt.

Stromab dem Heizkörper 3 sowie dem linken und rechten Bypasskanal 6, 7 ist ein linker und rechter Luftführungskanal 4, 5 vorgesehen, die vorzugsweise an seitlich am Gehäuse 2 angeordneten Austrittsöffnungen angeschlossen sind, so daß die durch die Bypasskanäle 6 und 7 strömende Kaltluft ggf. mit Warmluft aus dem Heizkörper 3 vermischt den zugehörigen Luftführungskanälen 4 und 5 unmittelbar zugeführt wird. In der gezeigten Anordnung wird der zentrale, abhängig von der Stellung des Ventils 19 (Fig. 2) erwärmte Luftstrom 27a im wesentlichen den in Fig. 1 gezeigten Kanälen 23, 24 zugeführt und lediglich ein Teil zu den beiden seitlichen Luftführungskanälen 4, 5 abgezweigt. Abhängig von der Stellung der linken Steuerklappe 8 bzw. der rechten Steuerklappe 9 wird diesem abgezweigten warmen Teilluftstrom 27a individuell im linken Klimatisierungskanal 4 ein Kaltluftstrom 27b und im rechten Klimatisierungskanal 5 ein Kaltluftstrom 27c beigemischt.

## Patentansprüche

1. Mehrkanalige Heizungs- und/oder Klimaanlage für ein Kraftfahrzeug mit an einem Gehäuse (2) angeordnetem Gebläse (1) und einem stromab dem Gebläse (1) in einem Luftkanal (31) des Gehäuses (2) angeordneten Heizkörper (3), wobei ein den Fluß eines Wärmemediums (16) durch den Heizkörper (3) steuerndes Ventil (19) zur Einstellung der Heizleistung des Heizkörpers (3) vorgesehen ist, sowie mit mindestens je einem bezogen auf das Fahrzeug linken bzw. rechten Luftführungskanal (4, 5), wobei beidseitig des Heizkörpers (3) je ein linker bzw. rechter Bypasskanal (6, 7) am Heizkörper (3) vorbeigeführt und dem jeweiligen linken bzw. rechten Luftführungskanal (4, 5) zugeordnet ist, und wobei innerhalb jedes Bypasskanals (6, 7) je eine eigene Steuerklappe (8, 9) angeordnet ist,
**dadurch gekennzeichnet, daß** zu Defrosterdüsen und/oder Fußraumdüsen führende Auslässe in dem Gehäuse (2) bezogen auf die Abströmseite des Heizkörpers (3) mindestens annähernd in der Mitte zwischen dem rechten und linken Bypasskanal (6, 7) angeordnet sind.

2. Anlage nach Anspruch 1,
**dadurch gekennzeichnet, daß** die Steuerklappen (8, 9) etwa in der Ebene des Heizkörpers (3) liegen.

3. Anlage nach Anspruch 1 oder 2,
**dadurch gekennzeichnet, daß** die Steuerklappe (8, 9) um eine etwa parallel zu einer linken bzw. rechten Kante (10, 11) des Heizkörpers (3) verlaufende Drehachse (12, 13) schwenkbar ist.

4. Anlage nach einem der Ansprüche 1 bis 3,
**dadurch gekennzeichnet, daß** die Steuerklappen (8, 9) in den Bypasskanälen (6, 7) unabhängig voneinander einstellbar sind.

5. Anlage nach einem der Ansprüche 1 bis 4,
**dadurch gekennzeichnet, daß** die Drehachse (12, 13) der Steuerklappen (8, 9) etwa annähernd in der Längsmittelachse der Steuerklappen liegen.

6. Anlage nach einem der Ansprüche 1 bis 5,
**dadurch gekennzeichnet, daß** im Luftkanal (2) bezogen auf die Strömungsrichtung vor dem Heizkörper (3) ein Kältemittelverdampfer (22) angeordnet ist.

## Claims

1. An air conditioning and/or heating system for a motor vehicle with multiple air passages having a fan (1) mounted on a housing (2) and a radiator (3) positioned downstream of the fan (1) in an air passage (31) of the housing (2), a valve (19) controlling the flow of a heating medium (16) through the radiator (3) being provided to adjust the heating output of the radiator (3), and having at least one left- and one right-hand - in relation to the vehicle - air passage (4, 5) with one left- and one right-hand bypass channel (6, 7) bypassing the heat exchanger (3) on either side and being assigned to the corresponding left-/right-hand air passage (4, 5), and one control valve (8, 9) being positioned inside each bypass channel (6, 7),
**characterised in that**
outlets leading to defroster nozzles and/or footwell nozzles are positioned in the housing (2) at least approximately in the centre between the right-and left-hand bypass channels (6, 7) in relation to the outflow side of the radiator (3).

2. A system in accordance with claim 1,
**characterised in that**
the controls valves (8, 9) lie approximately in the plane of the radiator (3).

3. A system in accordance with claim 1 or 2,
**characterised in that**
the control valve (8, 9) can be pivoted about an axis of rotation (12, 13) running approximately parallel to a left-/right-hand edge (10, 11) of the radiator (3).

4. A system in accordance with one of claims 1 to 3,
**characterised in that**
the control valves (8, 9) in the bypass channels (6, 7) can be adjusted independently of one another.

5. A system in accordance with one of claims 1 to 4,
**characterised in that**
the axis of rotation (12, 13) of the control valves (8, 9) lies approximately in the longitudinal central axis of the controls valves.

6. A system in accordance with one of claims 1 to 5,
**characterised in that**
positioned in the air passage (2) upstream of the radiator (3) in relation to the direction of flow is a coolant evaporator (22).

## Revendications

1. Système de chauffage et/ou de climatisation à conduits multiples pour un véhicule automobile, comprenant un ventilateur (1) disposé sur un carter (2) et un radiateur (3) disposé en aval du ventilateur (1), dans un conduit d'air (31) du carter (2), où il est prévu une soupape (19) servant au réglage de la puissance calorifique du radiateur (3), ladite soupape régulant le flux d'un milieu thermique (16) traversant le radiateur (3), et comprenant aussi au moins, à chaque fois, un conduit de passage d'air (4, 5), gauche ou droit par rapport au véhicule, où, des deux côtés du radiateur (3), à chaque fois un conduit de dérivation gauche ou droit (6, 7) est guidé en passant devant le radiateur (3) et associé au conduit de passage d'air respectif gauche ou droit (4, 5), et où à chaque fois un volet de commande propre (8, 9) est disposé à l'intérieur de chaque conduit de dérivation (6, 7), **caractérisé en ce que** des sorties conduisant à des buses de dégivrage et/ou à des buses prévues au niveau de l'espace pour les pieds sont disposées dans le carter (2), au moins presque au milieu entre le conduit de dérivation droit et gauche (6, 7), par rapport au côté sortie du radiateur (3).

2. Système selon la revendication 1, **caractérisé en ce que** les volets de commande (8, 9) se situent à peu près dans le plan du radiateur (3).

3. Système selon la revendication 1 ou 2, **caractérisé en ce que** le volet de commande (8, 9) est pivotant autour d'un axe de rotation (12, 13) s'étendant à peu près parallèlement à un bord gauche ou droit (10, 11) du radiateur (3).

4. Système selon l'une quelconque des revendications 1 à 3, **caractérisé en ce que** les volets de commande (8, 9) placés dans les conduits de dérivation (6, 7) sont réglables indépendamment l'un de l'autre.

5. Système selon l'une quelconque des revendications 1 à 4, **caractérisé en ce que** les axes de rotation (12, 13) des volets de commande (8, 9) se situent, à peu près, presque dans l'axe médian longitudinal des volets de commande.

6. Système selon l'une quelconque des revendications 1 à 5, **caractérisé en ce qu'**un évaporateur de fluide frigorigène (22) est disposé dans le conduit d'air (2), en amont du radiateur (3) par rapport à la direction d'écoulement.
